# EUROPEAN PATENT APPLICATION

(11) **EP 3 860 000 A1**
(43) Date of publication of application: **04.08.2021**
(21) Application number: 20305096.8
(22) Date of filing: 03.02.2020
(51) Int. Cl.: H04B 10/112, H04B 10/118, H04J 14/04, H04J 14/06

(54) **FREE-SPACE OPTICAL COMMUNICATION**

(71) Applicant: Nokia Solutions and Networks Oy, 02610 Espoo (FI)
(72) Inventor: BODDEDA, Rajiv, 91120 Palaiseau (FR); KUCERA, Stepan, Dublin 15, D14ER8A (IE); PIETILÄINEN, Antti Olavi, 02240 Espoo (FI)
(74) Representative: Swindell & Pearson Limited

(57) **Abstract**

An apparatus comprising: an optical transceiver comprising an optical transmitter and an optical receiver, the optical transceiver being configured to perform alignment of the optical transmitter and of the optical receiver, with respect to a remote optical device comprising a remote optical transceiver, and configured to perform bi-directional free-space optical data communication with the remote optical device; and wherein during the alignment, the optical receiver is configured to perform at least one of: filtering of electrical measurements of an optical signal received from the remote optical transceiver in a narrower frequency band than during the bi-directional free-space optical data communication; and optical mode demultiplexing of an optical signal from a multimode optical waveguide configured to receive the optical signal from the remote optical transceiver.

## Description

### TECHNOLOGICAL FIELD

Embodiments of the present disclosure relate to free-space optical communication.

### BACKGROUND

Free-space optical links can achieve high bit rates.

However, the range of a free-space optical link may be limited due to fog and other sources of atmospheric attenuation. Free-space optical links are also sensitive to misalignment of the optical transmitter or the optical receiver.

### BRIEF SUMMARY

Various embodiments are configured to aid in alignment of bi-directional free-space optical communication systems. The inventors realized that misalignment can be caused by wind-induced swaying of a pole or other semi-rigid mounting location of an optical transceiver for a free-space, optical link. Some embodiments described herein can, at least, partially compensate for such misalignments that may or may not vary in time.

According to various, but not necessarily all, embodiments there is provided an apparatus comprising: an optical transceiver comprising an optical transmitter and an optical receiver, the optical transceiver being configured to perform alignment of the optical transmitter and of the optical receiver, with respect to a remote optical device comprising a remote optical transceiver, and configured to perform bi-directional free-space optical data communication with the remote optical device; and wherein during the alignment, the optical receiver is configured to perform at least one of: filtering of electrical measurements of an optical signal received from the remote optical transceiver in a narrower frequency band than during the bi-directional free-space optical data communication; and optical mode demultiplexing of an optical signal from a multimode optical waveguide configured to receive the optical signal from the remote optical transceiver.

In some, but not necessarily all examples, during the alignment, the optical receiver is configured to filter electrical measurements of the optical signal received from the remote optical device in a narrower frequency band than during the bi-directional free-space optical data communication.

In some, but not necessarily all examples, the optical receiver includes an electrical filter configured to filter the electrical measurements in a passband at least ten times narrower during the alignment than during the free-space optical data communication.

In some, but not necessarily all examples, during a part of the alignment, the optical transmitter is configured to transmit a second optical signal to the remote optical device in a narrower frequency band than during the bi-directional free-space optical data communication.

In some, but not necessarily all examples, during a part of the alignment, the optical transmitter is configured to increase a divergence of a light beam carrying the second optical signal, and/or wherein during a part of the alignment, the optical transmitter is configured to adjust a direction of a light beam based on feedback received from the remote optical device.

In some, but not necessarily all examples, the alignment includes the optical receiver performing lateral mode demultiplexing of an optical signal received from the remote optical device.

In some, but not necessarily all examples, the optical receiver comprises a light detector and an optical lateral-spatial-mode demultiplexer, wherein the optical lateral-spatial-mode demultiplexer is configured to optical mode-separate received light, and wherein the light detector is configured to separately detect light of different modes received from the optical lateral-spatial-mode demultiplexer.

In some, but not necessarily all examples, the optical receiver is configured to align said optical receiver based, at least in part, on a lateral-spatial-mode content of said received light.

In some, but not necessarily all examples, during a part of the alignment, the optical transmitter is configured to adjust a direction of a light beam based on feedback received from the remote optical device, and/or wherein during a part of the alignment, the optical transmitter is configured to adjust a divergence of a light beam based on feedback received from the remote optical device.

In some, but not necessarily all examples, the optical transceiver is a first optical device and wherein the apparatus comprises the remote optical device, the remote optical transceiver of the remote optical device comprising a second optical transmitter and a second optical receiver, the remote optical device being configured to perform alignment of the second optical transmitter and of the second optical receiver, with respect to the first optical device, and configured to perform bi-directional free-space optical data communication with the first optical device; and wherein during the alignment, the remote optical device is configured to perform at least one of: filtering of electrical measurements of an optical signal received from the optical transmitter of the first optical device in a narrower frequency band than during the bi-directional free-space optical data communication; and optical mode demultiplexing of an optical signal received from the optical transmitter of the first optical device.

In some, but not necessarily all examples, during a part of the alignment, the second optical transmitter is configured to transmit an optical signal to the optical receiver of the first optical device in a narrower frequency band than during the bi-directional free-space optical data communication.

In some, but not necessarily all examples, during a part of the alignment, the second optical transmitter is configured to adjust a direction of a light beam based on feedback received from the first optical device, and/or wherein during a part of the alignment, the second optical transmitter is configured to adjust a divergence of a light beam based on feedback received from the first optical device.

In some, but not necessarily all examples, the second optical receiver comprises a second light detector and a second optical lateral-spatial-mode demultiplexer, wherein the second optical lateral-spatial-mode demultiplexer is configured to optical mode-separate received light, and wherein the second light detector is configured to separately detect light of different modes received from the second optical-lateral-spatial-mode demultiplexer.

According to various, but not necessarily all, embodiments there is provided a method comprising: performing alignment of an optical transmitter and an optical receiver of an optical transceiver, with respect to a remote optical device comprising a remote optical transceiver; and performing bi-directional free-space optical data communication with the remote optical device, wherein during the alignment, the method comprises at least one of: filtering of electrical measurements of an optical signal received from the remote optical device in a narrower frequency band than during the bi-directional free-space optical data communication; and optical mode demultiplexing of an optical signal from a multimode optical waveguide configured to receive the optical signal from the remote optical device.

According to various, but not necessarily all, embodiments there is provided a computer program that, when run on a computer, performs: causing alignment of an optical transmitter and an optical receiver of an optical transceiver, with respect to a remote optical device comprising a remote optical transceiver; and causing bi-directional free-space optical data communication with the remote optical device, wherein during the alignment, the method comprises at least one of: causing filtering of electrical measurements of an optical signal received from the remote optical device in a narrower frequency band than during the bi-directional free-space optical data communication; and causing optical mode demultiplexing of an optical signal from a multimode optical waveguide configured to receive the optical signal from the remote optical device.

According to various, but not necessarily all, embodiments there is provided a method comprising: performing alignment of an optical transmitter and an optical receiver of an optical transceiver, with respect to a remote optical device comprising a remote optical transceiver; and performing bi-directional free-space optical data communication with the remote optical device, wherein during the alignment, the method comprises: obtaining electrical measurements indicative of received power of an optical signal received from the remote optical device; and discriminating between received power drops caused by atmospheric attenuation, and received power drops caused by misalignment.

According to various, but not necessarily all, embodiments there is provided examples as claimed in the appended claims.

### BRIEF DESCRIPTION

Some examples will now be described with reference to the accompanying drawings in which:
FIG. 1 shows an example of a free-space optical communication system between two relatively remote optical transceivers;
FIG. 2 shows an example of the optical transmitters of FIG. 1;
FIG. 3 shows an example of the optical receivers of FIG. 1;
FIG. 4 is a flow chart illustrating a first method of operating a free-space optical link with separate alignment and regular optical communication modes based on pilot signals;
FIG. 5 is a flow chart schematically illustrating a first method of operating the optical transceivers of FIG. 1 in the alignment mode of FIG. 4 based on a pilot signal;
FIG. 6 illustrates the modulation signal spectra and correspondingly the optical signal spectra of the regular free-space optical communication mode of FIG. 4 and the alignment mode of FIG. 4 in the method of FIG. 5;
FIG. 7 is a flow chart illustrating a second method of operating the optical transceivers of FIG. 1 in the alignment mode of FIG. 4 based on lateral optical mode demultiplexing;
FIG. 8A is a block diagram illustrating an optical receiver usable by the optical transceivers of FIG. 1 to perform the method of FIG. 7;
FIG. 8B illustrates lateral intensity profiles of example lateral optical modes of an optical waveguide usable in the optical receivers of FIG. 8A to perform the method of FIG. 7;
FIG. 9 shows a method of operating the optical transmitters of FIG. 1 during an alignment mode of FIG. 4 to, at least, partially compensate for wind and/or fog;
FIGS. 10A and 10B show examples of how optical power received via a free-space optical link may vary due to wind and fog, respectively;
FIGS. 11A and 11B show other examples of how optical power received via a free-space optical link may vary due to wind and fog, respectively, for other operating conditions of the free-space optical link;
FIG. 12 is a flow chart schematically illustrating a method of setting an angular divergence of an optical beam in a free-space optical link; and
FIGS. 13A and 13B provide illustrative examples of how measurements of received optical power may vary in a free-space optical communication method.

### DETAILED DESCRIPTION

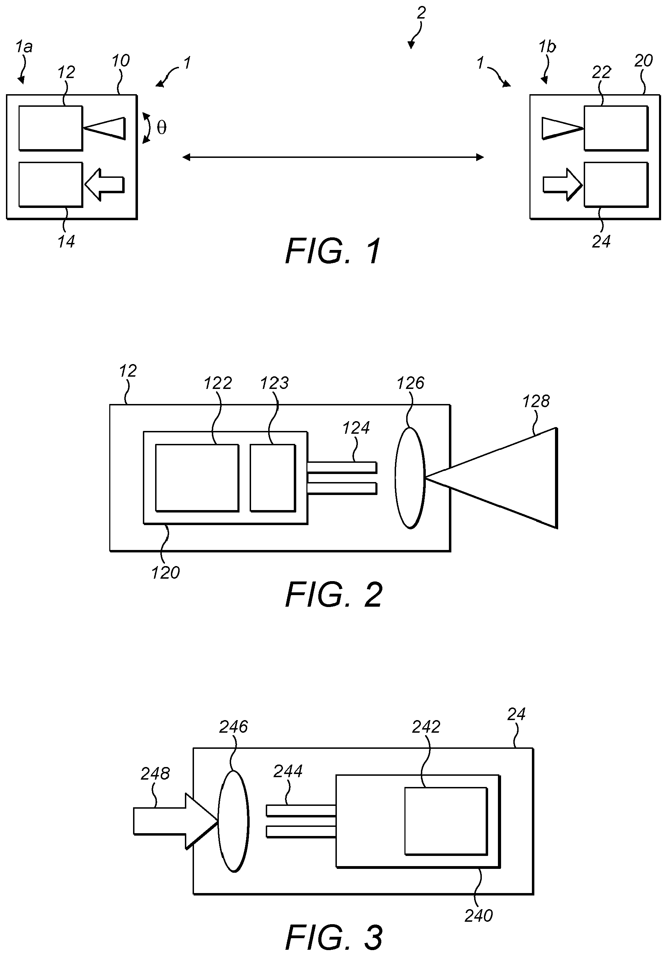

FIG. 1 illustrates an example of a bi-directional free-space optical communication system 2 and associated apparatus 1. The free-space optical communication system 2 comprises two optical transceivers 1a, 1b, which are physically separated from each other, but can communicate via a free-space optical channel. The optical transceivers 1a, 1b may be embodied in optical devices 10, 20, respectively.

Each optical transceiver 1a, 1b comprises an optical data transmitter 12, 22 and an optical data receiver 14, 24. Each optical transceiver 1a, 1b can modulate a digital data stream onto a light beam, which is transmitted to the free-space optical communication channel or link, to communicate data to the relatively remote optical transceiver 1b, 1a and/or perform relative alignment of the optical transceivers 1a, 1b. The light beam may be visible or infrared light, which may be produced by a laser or other light source in the optical transmitter 12, 22. Typically, there may be light beams transmitted in about opposite directions, e.g., to enable bi-directional optical communication and relative alignment of both optical transceivers 1a, 1b.

For data communication over the free-space optical link, the individual optical transmitters 12, 22 need to be angularly aligned so that the light beams therefrom are directed towards the distant optical transceivers 1b, 1a.

For data communication over the free-space optical link, optical detectors of the optical receivers 14, 24 typically should be angularly aligned to obtain adequate intensity from a light beam. For example, a light beam should be in field of view of the corresponding optical detector, and the optical detector may preferably extend about perpendicular to the local direction of said light beam. In addition, the optical detector may need to be located laterally to intercept a high intensity region of said light beam, e.g., if said light beam has a narrow diameter at the optical detector.

The optical transmitters 12, 22 and relatively remote optical receivers 24, 14 are desirably configured to form a free-space optical link therebetween, over which optical data may be communicated bi-directionally at a suitably high data rate. Bi-directional optical data communication refers to concurrent or consecutive optical communication in both directions between the optical transceivers 1a, 1b. In some, but not necessarily all examples, the two optical transceivers 1a, 1b may be separated from each other by tens or hundreds of metres or more, e.g., about 200 meters. Even at distances of about 200 meters, visible and near infra-red light may be subject to substantial atmospheric attenuation, e.g., due to fog. One method of compensating for such atmospheric attenuation is to narrow the angular divergence θ of the transmitted light beam.

Narrowing the angular divergence θ can increase the received optical power at the remote optical receiver 14, 24 to provide a higher signal-to-noise ratio and potentially enable a higher rate of data transmission. However, narrowing the angular divergence θ of the light beam can, in some cases, decrease the spot size of a light beam at the optical receiver 14, 24. If the spot size is only a few centimetres in diameter near the targeted optical receiver 14, 24, the free-space optical link may be very sensitive to misalignment of the optical transmitter 22, 12 and the relatively remote optical receiver 14, 24.

A suitable alignment for a free-space optical link may involve a suitable alignment of the optical transmitter 22, 12 and/or the remote optical receiver 14, 24 and/or optical detector thereof. If such a free-space optical link is bi-directional, then both relatively remote optical transmitter and detector pairs, i.e., pairs (22, 14) and (12, 24) will typically need to be aligned.

Misalignment can also occur dynamically when the optical transmitter 22, 12 and/or the relatively remote optical receiver 14, 24 is displaced from its static operating position and/or orientation. For example, in a free-space optical link, such misalignment can occur due to wind-induced swaying of a pole or other semi-rigid mounting location of the optical transceiver 1a, 1b.

In examples of the optical transmitters 12, 22, the alignment process may include adjusting a direction of a transmitted light beam, adjusting a divergence θ of the light beam, adjusting a lateral spatial mode content of said light beam, and/or transmitting a pilot signal of narrower bandwidth than during regular free-space optical data communication. In examples of the optical receivers 14, 24, the alignment process may include adjusting a view direction and/or a field of view, adjusting a location of a received light beam on a light detector, separating and separately detecting light of different lateral spatial modes, and/or narrow bandpass filtering measurements of received light to aid in recovery of pilot signals therefrom. During the alignment process, the pair of optical transceivers 1a, 1b may communicate alignment information therebetween, e.g., via pilot signals on the light beams communicated in both directions and/or by other data communication channels.

FIG. 2 illustrates example of either optical transmitter 12, 22 of FIG. 1 in more detail. The illustrated optical transmitter comprises a transmitter control system 120. The transmitter control system 120 comprises transmitter circuitry 122 and a light source 123, e.g., a laser.

The transmitter circuitry 122 is configured to convert a received sequence of electrical digital data signals into a sequence of data modulations of light from the light source 123. For example, the light from the light source 123 may be amplitude and/or phase modulated by various known formats. As an example, the data modulated light may be an optical pulse stream.

The transmitter control system 120 directs the data modulated or data-unmodulated light to transmitting optics 126, a lens system, which projects the light to the free-space optical link as a light beam 128. The light may be directed to the transmitting optics 126 by various optical devices, e.g., a lateral array formed by the parallel end(s) of one or more optical waveguides 124, e.g., transmitting optical fiber(s). Such a lateral array may have multiple optical waveguides to enable transmission of a non-axially symmetric light beam 128, but such a light beam 128 may also be produced by light from a single multimode optical waveguide by conventional methods. The present examples are intended to include optical transmitters 12, 22 to produce the light beam 128 with various lateral symmetries, e.g., axially symmetric or axially non-symmetric.

The optical control system 120 controls the direction and angular divergence θ of the light beam 128. Adjustment of these parameters may be performed by changing the distance, position, and/or relative direction of the end(s) of the one or more optical waveguides 124 with respect to the transmitting optics 126 by operating suitable mechanical alignment actuator(s). The skilled person in the relevant arts would understand how to make and use such actuator(s) based on the present disclosure.

FIG. 3 illustrates an example of the optical receivers 14, 24 of FIG. 1 in more detail. Each optical receiver 14, 24 may receive an incident portion of a light beam 248 from the free-space optical link via receiver optics 246, e.g., a lens system. Receiver optics 246 directs the received light to a light detector 242, e.g., one or more photodiodes, optically via free-space path or via a lateral array of one or more receiving optical waveguides 244, e.g., receiving fibers. The lateral array may have multiple waveguides to support lateral optical mode demultiplexing. Alternately, the lateral array may have a single optical waveguide whose light is optical mode demultiplexing for separate optical detection at a second end thereof.

The optical detector 242 makes electrical measurements of the received light and converts said measurements of the incident light beam 248 into a digital data stream, e.g., electrical amplification, filtering and analog-to-digital conversion. In some embodiments, the optical detector 242 may be, e.g., configured to separately measure light of different lateral spatial modes, e.g., of the received light beam 128 or of the lateral array of one or more optical waveguides 244. For example, the receiver control system 240 may measure light in different modes of a single multimode optical waveguide 244 in some embodiments.

The receiver control system 240 may comprise an electrical filter, e.g., an analog or digital electrical bandpass filter, to filter the electrical measurements of received optical signals in a selected frequency band. For example, the electrical filter may provide narrower band filtering during an alignment mode, e.g., to recover a narrow-band pilot modulation of the optical beam, than during regular optical data communication mode.

The receiver control system 240 may be able to adjust the location and/or field of view of the local optical receiver 14, 24. For example, one or more electrically controlled mechanical actuators may enable such adjustment(s) so that the light detector 242 is laterally positioned and/or directionally positioned for better optically coupling to the received light beam 248. Such one or more mechanical actuators may, e.g., adjust the receiver optics 246 to produce such adjustments of the optical coupling of the light detector 242.

The receiver control system 240 may, e.g., include a digital signal processor (DSP) for controlling operation during alignment and data communication modes of operation. Such a DSP may produce electrical filtering and recovery of modulations of a pilot signal and/or regular data from the sequence of measurements of the optical beam 248 via the light detector 242.

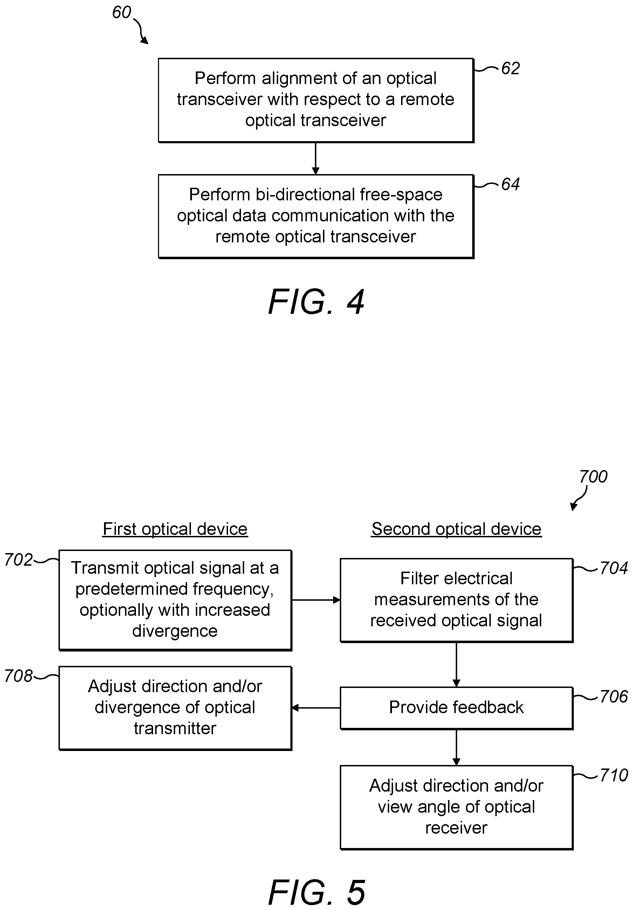

The operational modes of each optical transceiver 1a and 1b of FIG. 1 are illustrated in the method 60 of FIG. 4. Each optical transceiver 1a, 1b has an alignment mode 62 of operation and a regular free-space optical communication mode 64. In the alignment mode 62, the method 60 involves performing alignment of the local optical transmitter and optical receiver of the local optical transceiver, with respect to a remote optical transceiver. In the regular free-space communication mode 64, the method 60 includes performing bi-directional free-space optical communication of data between the local and remote optical transceivers, i.e., at a much higher data rate than in the alignment mode 62. In various embodiments, a pair of optical transceivers 1a, 1b may enter the alignment mode multiple times, e.g., to initialize alignment and to dynamically update the alignment with the remote optical transceiver.

Examples of specific alignment techniques are described below.

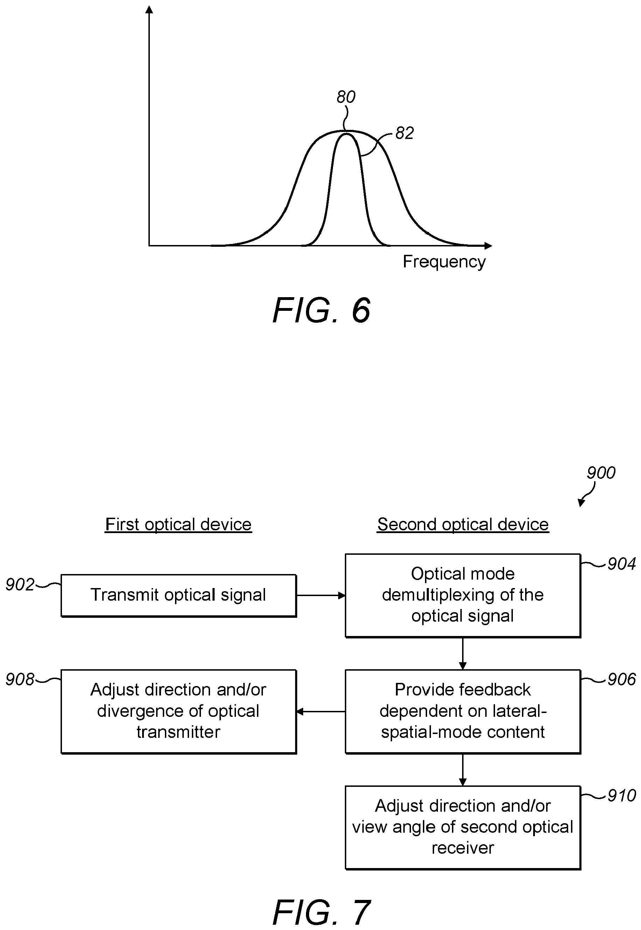

FIGS. 5 and 6 illustrate a method 700 for the pair of optical transceivers 1a, 1b of FIG. 1 for operation of the alignment mode 62 of FIG. 6 to establish or to improve communication over a free-space optical link between the pair.

The alignment method 700 is based on electrical measurements of the received optical beam over a narrow frequency band modulation to recover modulation by a low data rate pilot. The narrow frequency band is typically known to the both optical transceivers and is typically much narrower than the frequency band for regular data communication over the free-space optical link.

The optical signal has a narrower frequency bandwidth during portion(s) of the alignment mode 62 of FIG. 4 than during the regular free-space optical communication mode 64 of FIG. 4, i.e., due to the much lower data communication rate, i.e., of the pilot, during the alignment mode 62. Indeed, the data rate may be lower by a factor of 10 or more, often is lower by a factor of 100 or more of is lower by a factor a 1000 or more; the data rate can even be lower by a factor of a million or more during the alignment mode 62 of FIG. 4. For this reason, the frequency width of the optical signal and of the bandpass filtering of measurements thereof in the optical receiver can be narrower by a factor of 10 or more, by a factor of 100 or more, or even by a factor of 1000 or more during all or a portion of the alignment mode 62 of FIG. 4. But, the bandwidth reduction of the optical signal may not reach the same level of reduction as that of the baseband data signal, during the alignment mode 62 of FIG. 4, due to fluctuations in the optical source's center wavelength.

For the method 700 of FIG. 5, FIG. 6 illustrates example modulation spectra 82 of the optical beam transmitted in, at least, part of the alignment mode 62 of FIG. 4 and the modulation spectrum 80 of the optical beam transmitted in the regular free-space optical communication mode 64 of FIG. 4. The modulation spectrum 82 of the optical beam transmitted during, at least, part of the alignment mode 62 overlaps the modulation spectrum 80 of the optical beam transmitted in the regular free-space optical communication mode 64. The two spectra 80, 82 typically have about the same center optical wavelength because the same light source is modulated, but the spectra 82 for the optical signal transmitted in the alignment mode 82 is much narrower. Such a narrower frequency band 82 is typically acceptable, because the optical beam will carry data at a much lower rate during the alignment mode 62 than during the regular free-space optical communication mode 64.

During at least, part of the alignment mode 62, the optical beam may carry a pilot signal for easier identification of the optical beam and/or for feedback of information indicative of a measured alignment of an optical beam and/or indicative of a free-space optical channel condition. Such information typically requires a much lower data rate than in regular free-space optical communication. As an example, a first of the optical transceivers 1b, 1a may feedback, received light intensities, via the pilot signal, to enable the other of the optical transceivers 1a, 1b to angularly align transmission of the light beam therefrom to said first of the optical transceivers 1b, 1a and/or to adjust an angular divergence of said light beam from said first of the optical transmitters 1b, 1a. The needed data rate for such feedback information is typically much lower than the desired data rate during regular free-space optical communication, e.g., the data rate may be 10 or more times lower or even 100 or more times lower.

In the method 700 of FIG. 5, either of the optical transceivers 1a or 1b of FIG. 1 can be the first optical device of FIG. 5, and the other of the optical receivers 1b or 1a of FIG. 1 can be the second optical device of FIG. 5. Indeed, each optical transceiver 1a and 1b of FIG. 1 will perform the method 700 twice, i.e., once as the first optical device of FIG. 5 and once as the second optical device so that the free-space optical link is aligned in both directions. These two performances of the method 700 of FIG. 5 may be substantially concurrent, e.g., to enable optical feedback of alignment information in both optical communication directions during the alignment mode 62 of FIG. 4.

FIG. 5 illustrates a method 700 performed by the first and second optical devices. In the method 700, the first optical device performs steps 702 and 708, and the second optical device performs the steps 704, 706, and 710.

Either of the first and second optical transceivers 1a, 1b of FIG. 1 may initiate the alignment mode 62 of FIG. 4 and the performance(s) of the method 700 of FIG. 5.

The initiation of the alignment may result, e.g., from a determination that a loss of optical signal condition is satisfied. A loss of optical signal may comprise a received optical power or other quality metric for optical communication being below a predetermined threshold Alternatively, the alignment may be initiated prior to first usage of the free-space optical link, periodically, or manually by an operator.

At step 702, the optical transmitter of the first optical device transmits an optical signal to the optical receiver 24 of the second optical transceiver 1b within the predetermined narrower frequency band for the pilot signal.

In some, but not necessarily all examples, the optical transmitter of the first optical device may transmit the optical beam with wider angular divergence θ in step 702, than the during regular free-space optical communication mode 64 of FIG. 4.

Widening the optical beam's angular divergence θ increases the spot size of the light beam at or near the second optical device, which decreases sensitivity to misalignment of the transmitting optical transmitter. But, the wider optical beam may produce a reduced optical power at the optical detector of the second optical device.

During the alignment mode 62 of FIG. 4, a lowest value of the angular divergence θ may be greater than the largest value of the angular divergence θ during the regular bi-directional free-space optical communication 64 of FIG. 4.

In some, but not necessarily all examples, the divergence θ of the light beam 128 carrying the optical signal may be a value from the range approximately 10^-6 radians to approximately 0.01 radians. In some examples, the wider divergence θ may be at least approximately ten times wider during the alignment mode 62 than during the regular bi-directional free-space optical communication mode 64 of FIG. 4.

The lower received power from the wider optical beam may however, be partially compensated by the narrower frequency band for the pilot signal transmitted during this part of the alignment mode 62. That is, the detection of the narrower frequency pilot signal over noise may be easier thereby lowering the signal to noise threshold for detection in the optical receiver of the second optical device.

At step 704, in response to determining that the first optical device is operating in the alignment mode 62, the second optical device configures its optical receiver to filter electrical measurements of the received optical beam in the preselected narrower frequency band for pilot signal detection.

At step 706, the remote second optical device provides feedback to the first optical device based on the electrical measurements of the received optical beam at its optical receiver. The feedback may indicate whether its optical receiver detects the pilot signal, a detected power of said pilot signal, and/or an indication of direction(s) to reorient the light beam transmitted by the first optical device. Said feedback information may, e.g., be transmitted to the first optical transceiver 1a, e.g., via a pilot signal modulated onto a second light beam transmitted by the optical transmitter of the second optical device or may be transmitted to the first optical device by another communication channel.

At step 708, in response to receipt of said feedback, the first optical device adjusts its optical transmitter. In particular, the first optical device may adjust the direction of the light beam transmitted therefrom based on the feedback, e.g., using any suitable mechanical alignment actuator. Additionally, or alternatively, the first optical device may adjust the angular divergence θ of the light beam transmitted therefrom. For example, the angular divergence may be broadened so that the remote second optical device is more likely to receive a portion of said light beam. Alternatively, the angular divergence may be narrowed so that the potential incident optical power on the second optical device is higher.

At step 710, the second optical device may adjust its own optical receiver based on feedback of the measurements of the light beam received therein at step 704. For example, the second optical device may adjust the receiving direction, field of view, and/or location of its optical receiver to increase the intensity of received light on a light detector therein. In some alternate embodiments, the receiving direction and/or field of view of the optical receiver of each optical device may be automatically aligned with the transmission direction of the optical transmitter of the same optical device.

The steps 702, 708, 704, 706, and 710 of FIG. 5 may be repeated to align the two optical transceivers 1a, 1b of FIG. 1 for one communication direction over the free-space optical link in a sweeping search and/or iterative manner. For the other communication direction over the free-space optical link, the two optical transceivers 1a, 1b may also perform the method 700 FIG. 5, e.g., concurrently, for the opposite assignment of the optical transceivers 1a, 1b to the first and second optical devices of FIG. 5.

During such sweeping searches for a suitable alignment, the angular divergence θ of the optical beam(s) and/or the field of view of the optical receiver(s) may be varied. For example, the optical transmitter of either optical device may decrease the angular divergence θ of the light beam therefrom based on a receipt of feedback, e.g., indicating that the search is converging to a suitable alignment. Narrowing of the angular divergence θ can improve posible data rates and reduce sensitivity to fog or other free-space sources of attenuation. In some examples, the field of view of the optical receiver of the either optical device may be narrowed from an initial wide field of view during later parts of such a search, e.g., due to feedback that the field of view is converging to a suitable value.

The alignments of the first and second optical devices may be completed in response to satisfaction of alignment completion conditions Such as adequate completion condition may be that a received optical power is above a predetermined threshold and/or that an error rate for recovering a known sequence of pilot signals at the optical receiver(s) is below a predetermined threshold. In some examples, the completion condition may require the received optical power to remain above the predetermined threshold for a required duration.

Once the alignment mode 62 of FIG. 4 is completed, the regular bi-directional free-space optical communication mode 64 of FIG. 4 is commenced or resumed by the two optical transceivers 1a, 1b of FIG. 1.

FIG. 7 illustrates an example of the alignment mode 62 of FIG. 4, which is based on optical mode demultiplexing of an optical signal. This example can be separate from the pilot signal-based example illustrated in FIG. 5 or may be combined with the pilot signal-based example.

In the example of Fig. 7, the optical receiver(s) 14, 24 of FIG. 1 perform(s) demultiplexing of lateral optical propagation modes of the received optical signal.

A lateral mode has a corresponding lateral intensity and phase pattern of the electromagnetic field in the plane perpendicular to the propagation direction of the light beam. Typically, field patterns differing only by polarization or only by overall intensity and/or phase are not referred to as being different lateral modes. Multiple relatively orthogonal, lateral modes can occur in a free-space optical link, and different sets of such relatively orthogonal, lateral modes can occur in a multimode optical waveguide such as a multimode optical fiber.

If the incident light beam 248 is off-center on the end of a receiving fiber, the light beam may excite higher order modes in a multimode optical fiber, including non-axially symmetric (non-axisymmetric) modes. Excitation of the higher order non-axisymmetric modes is indicative of misalignment of such a light beam with the end of the multimode fiber if the transmitted light beam is locally axially symmetric.

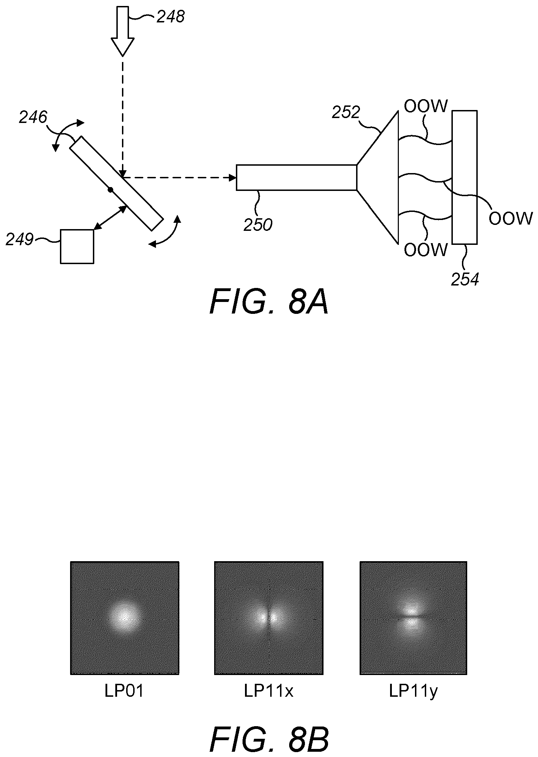

FIG. 8B illustrates three relatively orthogonal lateral optical modes, i.e., LP01, LP11x, and LP11y, of an axially symmetric, multimode optical fiber of low index contrast. The end-coupling of light to different ones of these lateral optical modes can be used to discriminate between different directional misalignments of an optical beam incident on the end of such a multimode optical fiber, e.g., one of the multimode optical waveguides of the array 244 of FIG. 3.

Here, LP stands for a linear polarization mode. Mode LP01 is often the lowest order mode for an axially symmetric, multimode optical fiber. The LP01 mode has an axially symmetric, lateral, intensity pattern, which may be like the lateral intensity pattern of a Gaussian optical beam. The modes LP11x and LP11y have relatively rotated, non-axially symmetric lateral intensity patterns, whose lateral intensity patterns are large off the propagation axes of these modes.

If the LP01 mode is excited by a light beam normally incident on the end of a multimode optical fiber and the excitation of the higher-order modes is negligible, the light beam is likely to be aligned on the end of the multimode optical fiber. Thus, such a mode excitation may be used as an indication that the light beam is suitably aligned with the optical receiver 14, 24 of FIG. 3, i.e., a suitable alignment of the optical transceivers 1a, 1b in the propagation direction of the light beam.

Alternatively, if at least one or more of the higher-order non-axisymmetric modes of the multimode optical fiber, such as LP11x or LP11y is(are) substantially excited by such the incident portion 248 of the light beam, the incident light beam is likely to be misaligned on the end of the multimode optical fiber. Thus, such mode excitations may be used as indications that the light beam is misaligned with the optical receiver 14, 24 of FIG. 3. Further, by comparing the excited power levels of the relatively orthogonal LP11x and LP11y lateral modes, the optical receiver 14, 24 may be configured, in some embodiments, to determine whether the light beam is more misaligned in an X or a Y direction. That is, more excitation of the LP11x mode indicates more X direction misalignment and more excitation of the relatively orthogonal LP11y mode indicates mode misalignment in the Y direction. Indeed, the relative powers excited for these two modes may be compared in the targeted optical receiver 14, 24 and then, used to provide feedback information to either or both optical transceiver 1a, 1b of FIG. 1 to aid in improving alignment during operation of the alignment mode 62 of Fig. 4,

For the method 900 of FIG. 7, other sets of lateral optical modes and/or other comparison criteria may be used by the optical receivers 14, 24 of FIG. 3 to provide such feedback information on the alignment state of the optical transceivers 1a, 1b of FIG. 1, e.g., during the alignment mode 62 of FIG. 4.

FIG. 8A illustrates an example of the optical receiver(s) 14, 24 of FIG. 3, which is capable of operating, in the alignment mode 62 of FIG. 4, based on lateral optical mode demultiplexing. For the illustrated optical receiver of FIG. 8A, the lateral array 244 of FIG. 3 is a single multimode optical waveguide 250, e.g., a multimode optical fiber or a multimode planar optical waveguide.

In FIG. 8A, the optical receiver also comprises an optical lateral-spatial-mode demultiplexer 252 and a light detector 254. The optical lateral-spatial-mode demultiplexer 252 receives light from the output end of the multimode optical waveguide 250 and, at least partially, lateral-optical-mode demultiplexes the light so that different parts of the light detector 254 can separately detect light from different ones of the lateral optical propagating modes of the multimode optical waveguide 250.

For example, the optical lateral-spatial-mode demultiplexer 252 may separate the received light from a plurality of relatively orthogonal, lateral modes or from a plurality of non-orthogonal, but linearly independent lateral modes. The plurality of lateral modes whose light is being separated may e.g., include one axisymmetric lateral mode and one or more non-axisymmetric lateral modes.

An example of the optical lateral-spatial-mode demultiplexer 252 may be a photonic lantern, whose optical output waveguides OOW are spliced to the output end of the multimode optical waveguide 250. Individual ones of the output optical waveguides OOW of the photonic lantern may direct light of different lateral modes to separately monitorable portions of the light detector 254. For example, the separately monitorable portions may be separate detection pixels or may simply be separate photodiodes of the light detector 254.

FIG. 8A also illustrates how various components may be positioned in an example of the optical receiver 14, 24 of FIG. 3. In particular, the example optical receiver of FIG. 8A includes an example of the optical receiving optics 246 of FIG. 3, which is capable of selectively changing a view direction and/or field of view of the optical receiver to enable detection of the incident portion of the light beam 248 of FIG. 3. In the illustrated example, the optical receiving optics 246 comprises one or more rotatable mirrors or beam splitters 246 whose angular orientation is(are) electrically adjustable via an alignment actuator 249. The alignment actuator 249 can rotate the receiving optics 246 to adjust the view direction and/or field of view of the optical receiver, e.g., during performance of alignment mode 62 of FIG. 4.

In the above example, the lateral-spatial-mode demultiplexer 252 integrates with the receiver control system 240 of FIG. 3. In other examples, a beam splitter 246 may be provided between a rotatable mirror 246 and the receiving fibers 244 of FIG. 3, such that the multimode fiber 250, lateral-spatial-mode demultiplexer 252, and light detector 254 are provided separately from the receiver control system 240, e.g. retrofitted as a separate module.

In various embodiments, the alignment actuator 249 may be able to rotate said view direction or field of view about one axis or two orthogonal rotational axes, and/or may be able to translate the received light beam to better align the light spot thereof with the input end of the optical waveguide 250. To enable rotation about two orthogonal rotational axes, the receiving optics 246 may include, e.g., a sequence of mirrors rotatable about differently oriented axes.

FIG. 7 illustrates a method 900 for operating first and second optical devices, during operation of the alignment mode 62 of FIG. 4 based on lateral optical mode demultiplexing in the optical receiver(s). The first optical device performs the steps 902 and 908, and the second optical device performs the steps 904, 906, and 910 of the method 900 during operation of this example of the alignment mode 62 of FIG. 4.

As for the method 700 of FIG. 5, either of the optical transceivers 1a, 1b of FIG. 1 may be the first optical device and the other of the optical transceivers 1b, 1a of FIG. 1 can operate as the second optical device during performance of the method 900 of FIG. 7.

Also, each optical transceiver 1a, 1b of FIG. 1 may perform the method 900 of FIG. 7 twice, simultaneously or sequentially, i.e., once as the first optical device and once as the second optical device. Then, the optical transceivers 1a, 1b of FIG. 1 can be aligned for bi-directional communication over the free-space optical link during performance of the alignment mode 62 of FIG. 4.

At step 902, the optical transmitter 12, 24 of the first optical device transmits optical beam 128 of FIG. 2 to the free-space optical link. Here, the optical beam may be data modulated or may be unmodulated by data.

At step 904, the optical receiver 12, 24 of the second optical device receives an incident portion 248 of the optical beam, e.g., as in FIG. 3, and performs lateral optical mode demultiplexing with the received portion of the light beam. Example implementations may perform such lateral optical mode demultiplexing of the excited lateral spatial modes in the receiving multimode optical waveguide 250 of FIG. 8A, as already described.

At step 906, the second optical device provides alignment feedback information based on separate measurements of the lateral mode demultiplexed light, which is produced at the step 904. The alignment feedback information may be configured to aid in determining whether the present alignment is suitable and/or aid at least, partially determining one angular direction of present misalignment.

For example, relative values of measured powers of the different axisymmetric and non-axisymmetric lateral optical modes may be compared to feedback information indicative of a direction in which the transmitted light beam is misaligned with respect to the targeted optical receiver. Also, the said relative values may be compared to provide feedback information indicative of a direction of misalignment of the view direction or field of view of the targeted optical receiver.

At the steps 908 and 910, the respective first and second optical devices may adjust the transmission direction and/or angular divergence of the light beam 128 of FIG. 3 and the optical receiver's field of view, respectively, based the alignment feedback information provided at the step 906.

At the step 906, part of the alignment feedback may be provided to the first optical device via optical signaling, e.g., over the free-space optical link, or may be provided by another communication mode such as radio frequency communication.

The direction may be adjusted in an aligning direction. The aligning direction may be known or may form part of a sweep.

If the alignment mode 62 of FIG. 4 involves a plurality of iteration steps and/or search sweeps to find a suitable transmission direction of the optical beam and/or a suitable view direction of the optical receiver performed, the steps 902, 904, 906 and 908 may be repeated. During such search sweeping the angular divergence θ of the light beam and/or the angular divergence of the field of view may be varied. For example, one or both these angular divergences may be widened initially and then, narrowed as the alignment feedback information indicates convergence of the alignments to suitable values.

The alignment of the optical transmitter 12, 22 of the first optical device with the optical receiver 24, 14 of the second optical device may be completed in response to a predetermined alignment completion condition being satisfied.

Monitoring for satisfaction of the alignment completion condition may be as described above.

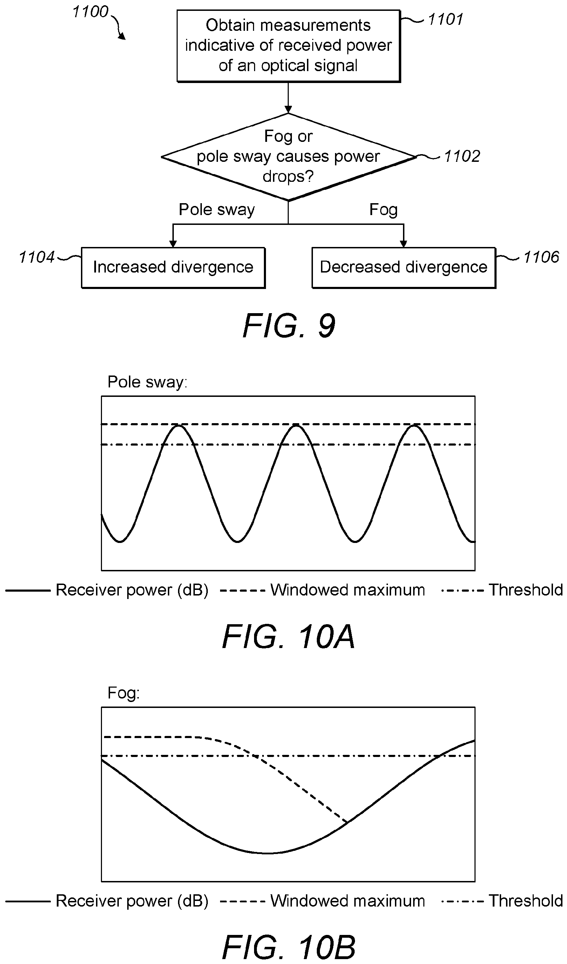

With reference to FIG. 9, an example alignment technique is disclosed, dependent on whether the received power drops due to atmospheric attenuation or due to misalignment. In this case, controlling the alignment comprises at least controlling the divergence θ of the transmitted light beam 128.

FIG. 9 shows according to various, but not necessarily all examples of the disclosure a method 1100. The method 1100 may be performed under the control of the optical transceivers 1a, 1b of FIG. 1. The method 1100 comprises:
at steps 1104 and 1106, performing alignment of an optical transmitter (e.g. 12) and an optical receiver (e.g. 14) of an optical transceiver (e.g. 11), with respect to a remote optical device (e.g. 20) comprising a remote optical transceiver (e.g. 21), wherein during the alignment, the method 1100 comprises:
at step 1101, obtaining electrical measurements indicative of received power of an optical signal received from the remote optical device; and
at step 1102, discriminating between received power drops caused by atmospheric attenuation, and received power drops caused by misalignment. Based on the following description, step 1102 could be more specifically written as discriminating between fast and slow received power drops.

In this example, the optical transceiver refers to the optical transceiver 11 of the first optical device 10 and the remote optical transceiver refers to the optical transceiver 21 of the second optical device 20. However, the alignment may be performed in the other direction or bi-directionally.

This is because pole sway causes relatively fast power drops. The power drops are caused by pitching, yawing or rolling of the optical device 10, 20. Pole sway typically has a frequency of no less than 0.1Hz. The periodicity may be caused by vortex shedding in steady or gusty winds, and may be affected by the resonance and rigidity of the pole.

By contrast, atmospheric attenuation causes relatively slow power drops. The primary mode of attenuation in free-space optical communication is fog-induced attenuation. Fog intensity characteristically varies slowly, compared to pole sway.

In addition, it should be noted that fog is strongly correlated with calm weather and low winds, because higher wind speeds tend to dissipate fog or prevent its formation. Therefore, at any one time the received power may be affected by either fog or pole sway, but not both concurrently.

Further, the appropriate alignment action depends on whether fog or pole sway is causing the power drop. If fog is the cause, the divergence θ should be narrowed to increase penetration of the light beam 128 through the fog. However, if pole sway is the cause, the divergence θ should be widened to reduce sensitivity to misalignment.

Therefore, at step 1104 the divergence θ of the light beam 128 of the local and/or remote optical transmitter 12, 22 is widened, when a received power drop is determined to have been caused by misalignment or has not been determined to have been caused by atmospheric attenuation.

At step 1106 the divergence θ of the light beam 128 of the local and/or remote optical transmitter 12, 22 is narrowed, when a received power drop is determined to have been caused by atmospheric attenuation or has not been determined to have been caused by misalignment.

At step 1102, the process of discriminating between the fast and slow power drops may comprise an apparatus 1 obtaining a sample set of a plurality of the electrical measurements, and performing signal processing based on the sample set. The result of the signal processing may be dependent on a rate of change of the received power. The discriminating may comprise comparing the result of the signal processing with an appropriate control threshold.

The signal processing may comprise statistical signal processing, for example.

The sample set may be a windowed sample set comprising a current measurement at time t=0 and a series of previous measurements sampled at times t-1, t-2, ..., t-n, where n is dependent on a window size.

The window size may comprise a sampling duration from the range approximately fifty milli-seconds up to approximately 20 seconds. In an implementation, the window size may comprise a sampling duration of approximately 10 seconds. In some examples, the window size may be configured in dependence on the structural characteristics of the specific pole/mounting location.

10 seconds is long enough to capture an entire pole sway event having a period of at least 10 seconds or less, such as a 0.1Hz oscillation. 10 seconds is not enough time to capture an entire transient power fluctuation caused by slowly-changing fog conditions.

FIGS. 10A and 10B illustrate an example of the windowed statistics for performing the discrimination.

FIG. 10A comprises a solid line indicating fluctuating received power. The solid line may indicate a link margin of the power of the optical receiver 14, for example. A link margin is the difference between the minimum expected received power, and the receiver's sensitivity. It would be appreciated that any specific metric could be used that indicates power/quality.

In FIG. 10A the received power fluctuates rapidly due to misalignment caused by pole sway. A sine wave is used purely for illustrative purposes; however, the method works if a single transient power drop is experienced, without periodicity.

The dashed line in FIG. 10A shows a statistic indicating an upper value of the received power. The statistic may comprise a maximum or a similar indicator of an upper value. The upper value may be a windowed upper value, representing the upper value of the sample set.

For illustrative purposes, the window size will be taken as 10 seconds, and the pole sway causes power drops having a frequency greater than 0.1Hz. This means that the windowed maximum received power is minimally affected by the falling received power, and remains at a near constant value. This is because the power drops are too fast to reduce the windowed maximum power.

The chain-dashed line shows a control threshold value against which the upper value is compared at step 1102. If the upper value is above the control threshold, as shown in FIG. 10A, the divergence θ may be widened (step 1104) or maintained. If the upper value falls below the control threshold, the divergence θ may be narrowed (step 1102).

In some examples, the control threshold may be a setpoint, wherein the divergence is widened when above the setpoint and narrowed when below the setpoint.

In an example implementation, the control threshold may comprise a link margin of approximately seven decibels.

FIG. 10B differs from FIG. 10A in that the drop of received power is much slower than in FIG. 10A, for example due to thickening fog. Therefore, if the power drop has a sufficiently long duration, dependent on the window size, the windowed maximum power will start to fall gradually and may drop below the control threshold.

Therefore, this 'windowed maximum' approach ensures that the divergence θ is only narrowed if the received power drop is caused by slowly changing conditions such as fog. This approach ensures that a wider divergence θ is maintained in good conditions and when power drops are caused by pole sway-induced misalignment.

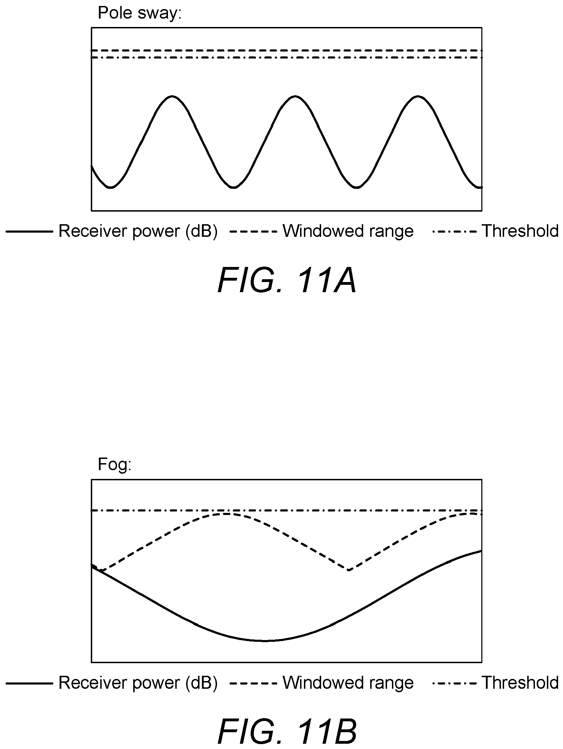

FIGS. 11A and 11B illustrate an example based on received power variation, rather than the windowed maximum. The same line types indicate the same types of variables (solid: received power, dashed: windowed statistic, chain-dashed: control threshold). In FIG. 11A the power drops are fast due to pole sway, and in FIG. 11B the power drops are slow due to fog.

In this example the statistic comprises an indicator of dispersion, such as a range. The dispersion provides information regarding the differences between an upper and lower values of the received power within the sample set. The range indicates a difference between the maximum and the minimum values of the received power. The control threshold may be a dispersion threshold such as approximately 5 decibels of range.

Fast power drops such as pole sway will increase the dispersion within the window. See for example FIG. 11A in which the dispersion is consistently above the control threshold. When the dispersion statistic is above the control threshold, the divergence θ is widened (step 1104).

FIG. 11B illustrates that if a power drop occurs sufficiently slowly, the dispersion statistic is minimally affected and will remain below the control threshold. When the dispersion statistic is below the control threshold, the divergence θ is not widened or is narrowed (step 1106). Therefore, a narrow divergence θ can be desirably maintained during foggy conditions.

The above examples refer to divergence control, because it is advantageous to maintain a narrow beam in foggy conditions and a wide beam in pole sway-conditions. In some examples, beam direction and/or field of view may be controlled.

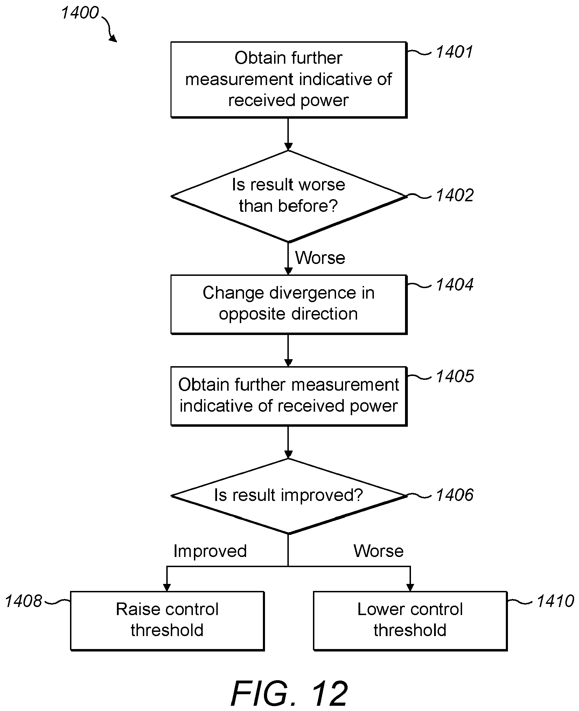

FIG. 12 illustrates an optional feedback method 1400 which may be performed after step 1104 and/or step 1106. The method 1400 comprises:
at step 1401, obtaining feedback dependent on electrical measurements indicative of received power of a further optical signal, wherein the further optical signal is received from the remote optical device after the changing of the divergence θ (1104, 1106); and
at step 1402, processing the electrical measurements to determine an effect of the divergence control on the received power.

If the feedback indicates that the received power is lower than before the divergence θ was controlled, the method 1400 comprises changing the divergence θ in the opposite direction, at step 1404.

An example of the feedback is a statistic indicative of a lower value of the received power. The statistic may comprise a minimum or a similar indicator of a lower value. The lower value may be a windowed lower value.

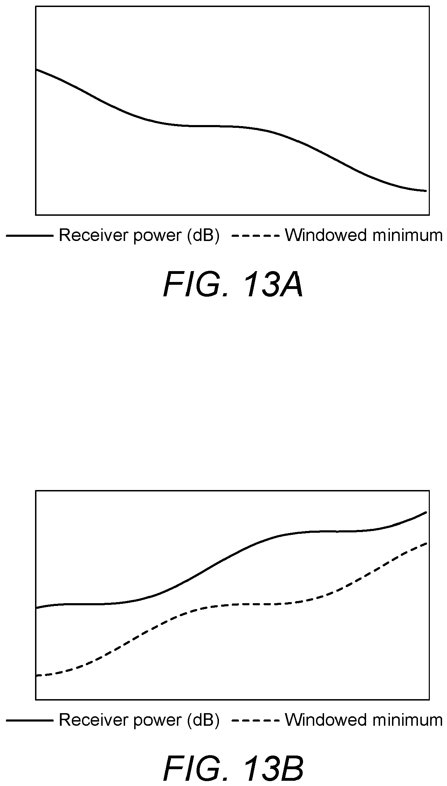

FIG. 13A illustrates an example in which the received power (solid line) and the feedback (dashed line) are still falling after step 1104 or step 1106 is performed. This causes the divergence θ to be changed in the opposite direction.

FIG. 13B illustrates an example in which the received power and the feedback are rising after step 1104 or step 1106 is performed. Therefore, the result is not worse than before and the method 1400 does not proceed to step 1404.

If the method 1400 proceeds to step 1404 to change the divergence θ in the opposite direction from step 1404/1406, the method 1400 may optionally comprise a further feedback loop from steps 1405 to 1410, to determine whether the action has resulted in any improvement.

At step 1405 further feedback is obtained. The further feedback may be dependent on electrical measurements indicative of received power of a still further optical signal, wherein the further optical signal is received from the remote optical device after the changing of the divergence θ in the opposite direction.

The further feedback may indicate the received power or the lower value of the received power as described above, such as a minimum received power.

Step 1406 comprises processing the further feedback to determine an effect of changing the divergence θ in the opposite direction on the received power.

If the further feedback indicates that the received power is greater than before the divergence θ was changed in the opposite direction, the method 1400 may comprise raising the earlier-defined control threshold at step 1408.

If the further feedback indicates that the received power is less than before the divergence θ was changed in the opposite direction, the method 1400 may comprise lowering the control threshold at step 1410.

Alternatively, or additionally to modifying the control threshold(s), the window size may be modified.

The method 1400 can be regarded as a self-optimization method which enables an optical device to adapt to its specific installation.

The above methods 1100, 1400 may be performed during regular communication, on payload-carrying optical signals. Alternatively, the methods may interrupt the regular communication.

The above methods 1100, 1400 may be performed in addition to, or alternatively to the methods 700, 900.

The various methods described herein may be performed by or under the control of an apparatus 1, such as at least one controller. A controller may reside in an optical device, in an optical transceiver, in an optical transmitter, in an optical receiver, or a combination thereof. A controller may even reside outside an optical device but may be configured to communicate with the optical device. References to a function being performed by an optical transmitter, optical receiver, controller, or optical transceiver may be replaced with a reference to an apparatus performing that function.

In some, but not necessarily all examples, the apparatus 1 comprises an optical device, the optical device comprising a controller and an optical transceiver.

A controller controlling a remote optical device may be a different controller from a controller controlling a local optical device. Alternatively, the same controller may control both the local optical device and the remote optical device.

According to various, but not necessarily all examples of the disclosure there is provided an apparatus 1 comprising: at least one processor; and at least one memory including computer program code the at least one memory and the computer program code configured to, with the at least one processor, cause the apparatus 1 at least to perform: performing alignment of an optical transmitter and an optical receiver of an optical transceiver, with respect to a remote optical device comprising a remote optical transceiver; and performing bi-directional free-space optical data communication with the remote optical device, wherein during the alignment, the method comprises at least one of: filtering of electrical measurements of an optical signal received from the remote optical device in a narrower frequency band than during the bi-directional free-space optical data communication; and optical mode demultiplexing of an optical signal received from the remote optical device.

According to various, but not necessarily all examples of the disclosure there is provided computer program instructions for causing an apparatus to perform at least the following or for performing at least the following: causing alignment of an optical transmitter and an optical receiver of an optical transceiver, with respect to a remote optical device comprising a remote optical transceiver; and causing bi-directional free-space optical data communication with the remote optical device, wherein during the alignment, the method comprises at least one of: causing filtering of electrical measurements of an optical signal received from the remote optical device in a narrower frequency band than during the bi-directional free-space optical data communication; and causing optical mode demultiplexing of an optical signal received from the remote optical device.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The steps illustrated in the Figs 4, 5, 7, 9, 12 may represent steps in a method and/or sections of code in the computer program. The illustration of an order to the steps does not necessarily imply that there is a required or preferred order for the steps and the order and arrangement of the steps may be varied in different embodiments. Furthermore, it may be possible for some steps to be omitted.

Where a structural feature has been described, it may be replaced by means for performing one or more of the functions of the structural feature whether that function or those functions are explicitly or implicitly described.

The above described examples find application as enabling components of: automotive systems; telecommunication systems; electronic systems including consumer electronic products; distributed computing systems; navigation systems; networks including cellular, non-cellular, and optical networks; ad-hoc networks; the internet; the internet of things; virtualized networks; and related software and services. In an example implementation, the optical devices 10, 20 may be configured to provide cells or to interconnect cells in a 5G NR (5G New Radio) system, or another past or future wireless technology.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims. For example, the free-space optical communication system 1 may be configured to communicate in a single direction rather than bi-directionally. One of the optical transceivers may be replaced with an optical transmitter and the other of the optical transceivers may be replaced with an optical receiver.

Features described in the preceding description may be used in combinations other than the combinations explicitly described above. For example, if alignment is carried out in both directions, it does not matter which optical device starts or completes alignment first.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
an optical transceiver comprising an optical transmitter and an optical receiver, the optical transceiver being configured to perform alignment of the optical transmitter and of the optical receiver, with respect to a remote optical device comprising a remote optical transceiver, and configured to perform bi-directional free-space optical data communication with the remote optical device; and
wherein during the alignment, the optical receiver is configured to perform at least one of:
filtering of electrical measurements of an optical signal received from the remote optical transceiver in a narrower frequency band than during the bi-directional free-space optical data communication; and
optical mode demultiplexing of an optical signal from a multimode optical waveguide configured to receive the optical signal from the remote optical transceiver.

2. The apparatus of claim 1, wherein during the alignment, the optical receiver is configured to filter electrical measurements of the optical signal received from the remote optical device in a narrower frequency band than during the bi-directional free-space optical data communication.

3. The apparatus of claim 2, wherein the optical receiver includes an electrical filter configured to filter the electrical measurements in a passband at least ten times narrower during the alignment than during the free-space optical data communication.

4. The apparatus of claim 1, 2, or 3, wherein during a part of the alignment, the optical transmitter is configured to transmit a second optical signal to the remote optical device in a narrower frequency band than during the bi-directional free-space optical data communication.

5. The apparatus of claim 4, wherein during a part of the alignment, the optical transmitter is configured to increase a divergence of a light beam carrying the second optical signal, and/or wherein during a part of the alignment, the optical transmitter is configured to adjust a direction of a light beam based on feedback received from the remote optical device.

6. The apparatus of any preceding claim, wherein the alignment includes the optical receiver performing lateral mode demultiplexing of an optical signal received from the remote optical device.

7. The apparatus of claim 6, wherein the optical receiver comprises a light detector and an optical lateral-spatial-mode demultiplexer, wherein the optical lateral-spatial-mode demultiplexer is configured to optical mode-separate received light, and wherein the light detector is configured to separately detect light of different modes received from the optical lateral-spatial-mode demultiplexer.

8. The apparatus of claim 7, wherein the optical receiver is configured to align said optical receiver based, at least in part, on a lateral-spatial-mode content of said received light.

9. The apparatus of claim 6, 7, or 8, wherein during a part of the alignment, the optical transmitter is configured to adjust a direction of a light beam based on feedback received from the remote optical device, and/or wherein during a part of the alignment, the optical transmitter is configured to adjust a divergence of a light beam based on feedback received from the remote optical device.

10. The apparatus of any one of claims 1 to 9, wherein the optical transceiver is a first optical device and wherein the apparatus comprises the remote optical device, the remote optical transceiver of the remote optical device comprising a second optical transmitter and a second optical receiver, the remote optical device being configured to perform alignment of the second optical transmitter and of the second optical receiver, with respect to the first optical device, and configured to perform bi-directional free-space optical data communication with the first optical device; and
wherein during the alignment, the remote optical device is configured to perform at least one of:
filtering of electrical measurements of an optical signal received from the optical transmitter of the first optical device in a narrower frequency band than during the bi-directional free-space optical data communication; and
optical mode demultiplexing of an optical signal received from the optical transmitter of the first optical device.

11. The apparatus of claim 10, wherein during a part of the alignment, the second optical transmitter is configured to transmit an optical signal to the optical receiver of the first optical device in a narrower frequency band than during the bi-directional free-space optical data communication.

12. The apparatus of claim 10 or 11, wherein during a part of the alignment, the second optical transmitter is configured to adjust a direction of a light beam based on feedback received from the first optical device, and/or wherein during a part of the alignment, the second optical transmitter is configured to adjust a divergence of a light beam based on feedback received from the first optical device.

13. The apparatus of claim 10, 11, or 12, wherein the second optical receiver comprises a second light detector and a second optical lateral-spatial-mode demultiplexer, wherein the second optical lateral-spatial-mode demultiplexer is configured to optical mode-separate received light, and wherein the second light detector is configured to separately detect light of different modes received from the second optical-lateral-spatial-mode demultiplexer.

14. A method comprising:
performing alignment of an optical transmitter and an optical receiver of an optical transceiver, with respect to a remote optical device comprising a remote optical transceiver; and
performing bi-directional free-space optical data communication with the remote optical device,
wherein during the alignment, the method comprises at least one of:
filtering of electrical measurements of an optical signal received from the remote optical device in a narrower frequency band than during the bi-directional free-space optical data communication; and
optical mode demultiplexing of an optical signal from a multimode optical waveguide configured to receive the optical signal from the remote optical device.

15. A computer program that, when run on a computer, performs:
causing alignment of an optical transmitter and an optical receiver of an optical transceiver, with respect to a remote optical device comprising a remote optical transceiver; and
causing bi-directional free-space optical data communication with the remote optical device,
wherein during the alignment, the method comprises at least one of:
causing filtering of electrical measurements of an optical signal received from the remote optical device in a narrower frequency band than during the bi-directional free-space optical data communication; and
causing optical mode demultiplexing of an optical signal from a multimode optical waveguide configured to receive the optical signal from the remote optical device.
